# EUROPEAN PATENT APPLICATION

(11) **EP 0 616 773 A1**
(43) Date of publication of application: **28.09.1994**
(21) Application number: 94200499.5
(22) Date of filing: 28.02.1994
(51) Int. Cl.: A21C 13/02

(54) **Proofer with a special endless transport system and connected carriers**

(71) Applicant: Rijkaart, Lodewijk Cornelis, NL-3871 BC Hoevelaken (NL)
(72) Inventor: Rijkaart, Lodewijk Cornelis, NL-3871 BC Hoevelaken (NL)

(57) **Abstract**

The invention concerns a strong improved prover (1), which is very compact in size, wherein several horizontal endless transporters (3) are situated above each other, of which onto these vertical carriers (6) with tiltable proverbags (9) are mounted, of which the aforementioned carriers are supported and guided on the lower and topside in a track, of which the total construction of the proverbags (9) are equiped in such a way to the vertical carriers (6) of special turnover blocks (18) for a robust guiding and stabel turnover of the proverbags (9).

## Description

The invention concerns a prover/proofer containing a compartment with inside a transport system consisting of at least one endless transporter in a certain level/plane and which is driven over at least two turning points, of which the transporter is meant for the driving of at least one carrier, of which the centreline is mounted almost perpendicular on the mentioned plane, by which the carriers are supplied with axis on which means are mounted for the input of dough pieces, of which on the axis with containing unit means have been fitted for the positionrigid moving and the rotation of the mentioned containing units elements for taking up dough pieces with respect to the mentioned carriers.

Such a prover is known from the Dutch Patent application number 9 002 579. At this known prover are two at horizontal distance running vertical endless transporters present and between them are the carriers for the dough pieces. By means of bearing pin structures and suchlike carriers with the dough pieces can be turned over. The dough pieces, in proverbags, in a large prover compartment make vertical up and down going movements on chains around return pulleys, of which the dough pieces stay in the same carrier during one complete circulation. Only at the bottom side of the transportsystem the carriers are turned over and the "finished" dough pieces are dropped out automatically. The dough pieces can, by means of the aforementiond special axis suspension structure of the proverbags only come out of the proverbags at the bottom side of the prover.

Furtheron can be mentioned that at the bottomside of the prover the dough pieces always come out due to the necessary turning over of the proverbags. With this structure there is no possibility to turnover the proverbags separately and/or not turnover the proverbags at all, moving in at least a certain plane that is vertical in order to keep the dough pieces inside the prover for a longer treatment. Thus excluding adjustment facilities in a large prover, which represent objections when using in practice.

The invention of the prover has the specific purpose to eliminate the objections and that the aforementioned plane, in which at least one mentioned endless transporter runs, is almost horizontal, whereby aforementioned containing units proverbags are mounted in one row above each other rotatable in a frame to aforementioned perpendicular position with respect to aforementioned plane with almost vertical carriers by means of an axis, of which at the axis and in the compartment facilities are introduced for the firm position and the rotation posibility of aforementioned proverbags and whereby more proverbags are mounted against each other in horizontal way.

Furthermore the prover according to the invention has been designed that at least one aforementioned endless transporter is a chain and that aforementioned two turnover structures are roller wheels and that the aforementioned endless transporter is supplied with take along units for transportation of the aforementioned vertical carriers.

The advantages are a suprisingly suitable, a very compact transport structure for the aforementioned containing units with proverbags has been constructed inside a very compact prover. The conditioning of the interior of the prover has therefor become much simpler as well as more economical.

So the prover according to the invention has been further designed that the mentioned almost vertical carrier is supplied with a vertical bearing roller at the bottom which runs in a guide track and that the topside of the mentioned vertical carrier is supplied with a horizontal roller wheel, which also runs in the guide track with the same trace as the mentioned guide track and are vertically above each other and that the cross section of the mentioned tracks have a U-shape or channel shape.

The advantages are that a simpel structure for a good guidance and supporting carrier structure for the containing units with proverbags has been created.

So the prover according to the invention has been further developed that mentioned proverbags are mounted on a circulating frame, mounted on the mentioned axis and that the mentioned circulating frame, seen in top view, can be round, oval, oblong, rectangular or square and that the mentioned axis by means of a bearing is mounted in the almost vertical carrier.

The advantages are that the carrier has a simple and compact structure with easy turnover carriers, by which the horizontal and/or vertical centre-to-centre distance can be extreme minimal.

So the prover according to the invention has been further developed in such a way that the mentioned position/standsecurity of mentioned proverbags is made of a special constructed turnover block that is guided through a L-profile of which the L-profile is interrupted at certain places by which the special contructed turnover blocks collide against an axis in order to turnover the proverbag and that mentioned turnover block has a cross section of a diabolo of which the sides of the body have a rounded configuration.

The advantages are that the carrier structure with proverbags can be moved and turned over firmly, presicely and without wear during the horizontal tour in the prover, meaning without having to remove dough pieces out of the prover during the process.

So the prover according to the invention has been further developed in such a way that the mentioned proverbags in one frame all can be turned over separately and therefore the vertical centre-to-centre distance of it is more than the half width dimension of the frame in top view and that the mentioned proverbags in a frame are turned over in dependance on each other and therefore the vertical distance of it can be smaller than half the dimensional width of the frame in top view.

The advantages are that by means of the gravitational force the dough pieces can be dropped down one "floor" lower each time, by which a suprisingly flexibel and optimal use of the prover can be attained, which prover is much more compact in outer dimensions than conventional provers.

So the prover according to the invention has been further developed in such a way that the mentioned prover is a reqtanguar parallelepipedum and that the imput of a dough piece is executed through an opening at the top side by means of a hopper.

The advantage is that the prover has a closing opening with minimal dimensions at the top- and bottom-side and therefore the conditioning inside the prover is minimally disturbed, so that the control of the conditioning is simple.

The invention is further explained by means of a preferred embodiment of the prover, as shown in the drawings. Showing:
- Fig. 1: a transparant top view of the prover according to the invention showing the horizontal transporter with the containing units of the proverbags mounted at the vertical carriers;
- Fig. 2: a transparant side view of the prover according to the invention schematic showing the vertical carriers with in the top layer the proverbags;
- Fig. 3: a turnover procedure of the proverbags in the top layer, by which the dough piece falls down over one layer due to the gravitational force;
- Fig. 4: a turnover procedure of the four top layers (horizontal) proverbags by which the dough pieces fall down over one layer due to the gravitational force;
- Fig. 5: the turnover mechanism mounted at the end of the axis of the containing units with proverbags according to the invention;
- Fig. 6: a vertical section over the line VI of figure 2, by which the vertical carrier mounted with containing units with proverbags is shown;
- fig. 7: a horizontal section over the line VII-VII of figure 6 of the vertical carrier;
- Fig. 8: a section over the line VIII-VIII of figure 7 over the proverbags;

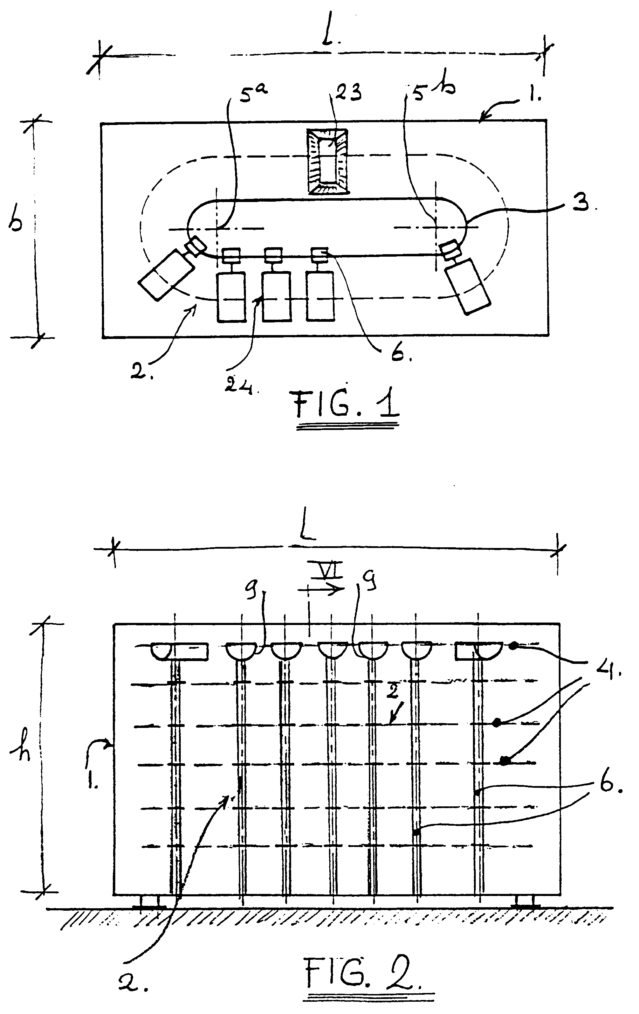

In figure 1 the top view of the prover (1) is shown, of which the top side is given transparant in order to show the inner transportsystem (2). The transporter (3) consists of a chain (10) which runs endlessly around the turn system, being chain wheels (5a) and (5b). The containing units (24), mounted to the almost vertical carriers (6), are given in a schematrical way. On the topside of the prover (1) the hopper (23) is shown to put the dough pieces (8) into the prover on the transport system (2).

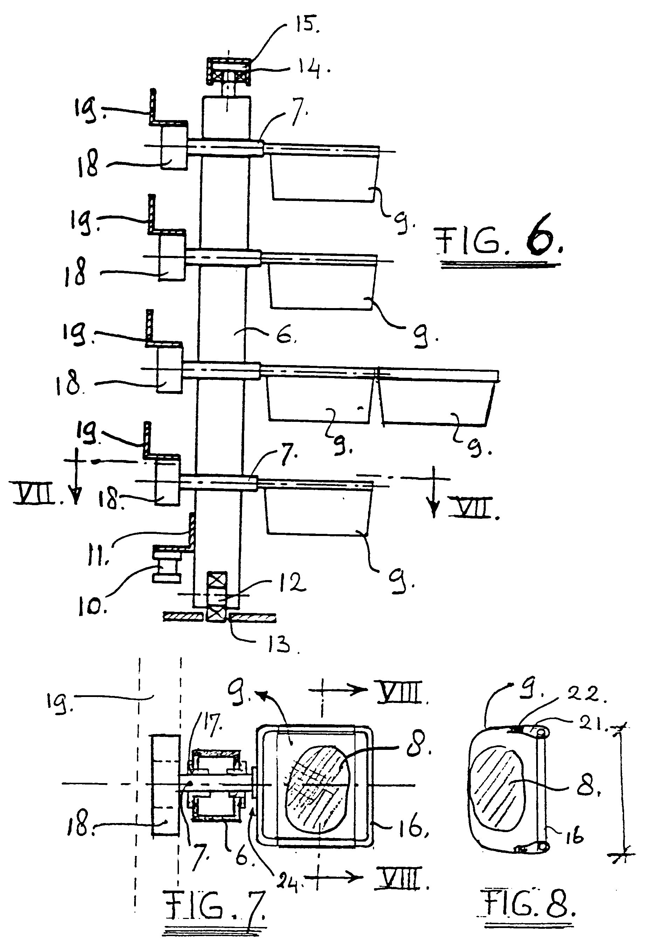

Figure 2 shows the prover (1) of figure 1 in side view whereby the side wall is transparant in order to give an impression of the transportsystem (2). This side view clearly shows that the transportsystem (2) works in horizontal planes (4). Also is shown that, according to the invention, the carriers (6), due to the conception, almost run vertically. So the figures 7 and 8 show the top horizontal row of proverbags (9) to put on dough pieces (8).

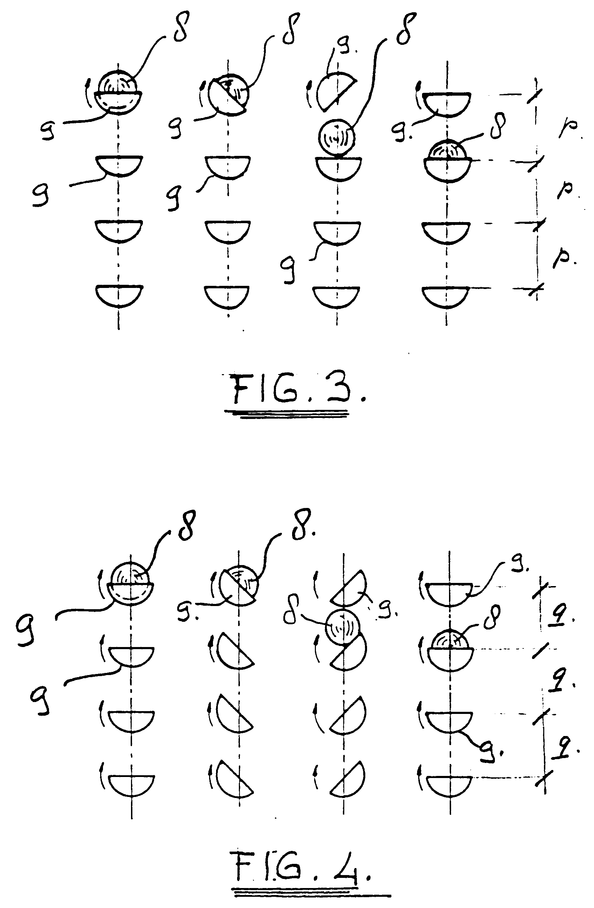

In figures 3 and 4 the turnover procedures of the proverbags (9) with in them the dough pieces (8) are shown. Figure 3 shows the turnover procedure of only the top layer proverbags (9), whereby the vertical centre-to-centre distance *p* of the proverbags (9) is bigger than the half width *br* (figure 8) of the proverbag (9). The dough pieces (8) fall due to the gravitational force one layer down into the proverbags. Figure 4 shows the simultaneous turnover procedure of all horizontal rows of proverbags (9), through which the vertical centre-to-centre distance *q* of the proverbags (9) is smaller than half the width *br* (figure 8) of the proverbag (9). The dough pieces (8) fall, layer by layer under the influence of the gravitational force, and each time one layer down into a proverbag (9). By this the value of *q* is smaller than the value of *p*.

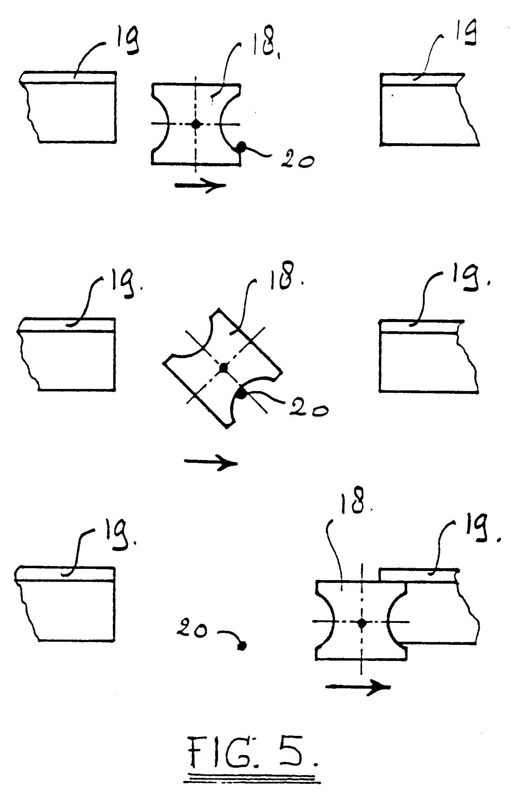

Figure 5 shows in detail the working of the turnover blocks (18) with the guiding L-profile (19) and the turnover axis (20).

In figures 6 and 7 the placement of the turnover blocks (18) are shown on the axis (7) of the containing units (24) with the frame (16) with the proverbag (9) in it containing the dough piece (8). Through the diabolic cross section of the turnover block (18) the axis (20) can, as shown in figure 5, turnover the turnover block (18) and so the proverbag (9) with inside the dough piece (8).

Figure 6 shows the vertical carrier (6) mounted in it the axis (7) with the containing units (24) with therein the frame (16) with the proverbags (9), where if necessary horizontaly more proverbags can be mounted (in figure 6 this is marked). The guiding of the turnover blocks (18) is also shown along the L-profile (19). The support of the vertical carrier (6) has space due to the bearing roller (12) in a U-shaped guiding track (13). The horizontal support of the carrier (6) is equiped with a roller wheel (14) in an also U-shaped guiding track (15). The horizontal driving is done by means of a chain (10) via the take along-units (11) of the vertical carrier (6).

Figure 7 shows that the axis (7) is mounted by means of a bearing (17) inside the vertical carrier (6).

Figure 8 shows the vertical section over the line VIII-VIII of figure 7. Also is shown the corner of the proverbag (9) "wrapped" around frame (16) at turnover point (21) and is attached by means of, for example, velcro (22).

Further can be mentioned that with the prover (1) according to the invention it is possible to minimize the dimensions of the prover enormously, so that control of the conditioning inside the compartment becomes much easier.

Last but not least is it necessary to mention that the above description is a preferable execution of the prover and that of course modifications are possible without abandoning the limits of this patent specifications.

## Claims

1. Prover (1) consisting of a compartment with inside that a transport system (2) consisting of at least one endless transporter (3) in a certain plane (4) and which is transported over at least two turnover structures (5a, 5b) with which the transport system (3) is driving at least one carrier (6) of which the centre-line is almost perpendicular situated on the mentioned plane (4) of the tansporter (3), whereby the carriers (6) are supplied with axis (7) with on them the containing units for the imput of dough pieces (8), of which containing units are mounted in the axis (7) in order to achieve the stable movement and rotation of the mentioned containing units for the imput of the dough pieces (8) with regard to the mentioned carriers (6) **characterized in that** the mentioned plane (4) with at least one mentioned endless transporter (3) is running, is almost horizontal, whereby on the mentioned containing units (24) proverbags (9) at the frame (16) are mounted in one row above each other rotatable onto the mentioned perpendicular mounted with regard to the mentioned plane (4) of almost vertical carrier (6) by means of an axis (7), whereby the axis (7) and inside of the compartment (1) facilities have been mounted for the stable stand and rotation of mentioned proverbags (9), and whereby several proverbags (9) can be mounted against each other in horizontal way.

2. Prover as claimed in claim 1, **wherein** at least one aforementioned endless transporter (3) is a chain (10) and that aforementioned two turnover structures (5a, 5b) are chain wheels.

3. Prover as claimed in claim 2, **wherein** the aforementioned endless transporter (3) is equiped with take along units (11) for transporting the aforementioned almost vertical carriers (6).

4. Prover as claimed in claim 1-3, **wherein** the aforementioned almost vertical carrier (6) is equiped with a vertical bearing roller (12) at the bottom side, which runs in a guiding track (13) and that the top side of the aforementioned vertical carrier (6) is equiped with a horizontal roller wheel (14), which also runs in a guiding track (15) with the same trace as the aforementioned guiding track and are situated vertical above each other.

5. Prover as claimed in claim 4, **wherein** the vertical section of the aforementioned tracks (13, 15) are U-shaped or channel shaped.

6. Prover as claimed in claim 1, **wherein** the aforementioned proverbags (9) are mounted at a rotating frame (16), mounted to aforementioned axis (7).

7. Prover as claimed in claim 6, **wherein** the aforementioned rotating frame (16) seen from top view is round, oval, oblong, rectangular or square.

8. Prover as claimed in claim 1, **wherein** the aforementioned axis (7) is mounted by means of a bearing (17) in aforementioned vertical carrier (6).

9. Prover as claimed in claim 1, **wherein** the aforementioned position stable stand of the aforementioned proverbags (9) is made of turnover block (18) of a special structure that is guided through a L-profile (19) and is interrupted at certain places, by which the special constructed turnover blocks (18) can collide against axis (20) in order to turnover the proverbag (9).

10. Prover as claimed in claim 9, **wherein** the aforementioned turnover block (18) has a vertical section of a diabolo, of which the side of the body is rounded up.

11. Prover as claimed in claim 1, 6 and 7, **wherein** the aforementioned proverbags (9) are mounted sagging through to the aforementioned circulating frame (16) by means of an overturn (21) on mentioned frame (16) and are attached by means of, for example, velcro (22).

12. Prover as claimed in claim 1, **wherein** the aforementioned proverbags (9) in a frame (16) can all be turned over separately and therefore the vertical centre-to-centre distance is bigger than half the width of the dimension of the frame (16) seen from top view.

13. Prover as claimed in claim 1, **wherein** the aforementioned proverbags (9) in a frame (16) can be tilted over dependant on each other and therefore the vertical distance can be smaller than half the width dimension of the dimension of the frame (16) seen from top view.

14. Prover as claimed in claims 1-2, **wherein** the aforementioned chain of the endless transporter (3) is driven by means of an electromotor.

15. Prover as claimed in claims 1-5, **wherein** the horizontal centre-to-centre distance of the vertical carriers (6) is a bit larger than the width of the frame (16) with proverbags (9).

16. Prover as claimed in claim 15, **wherein** the number of the almost vertical carriers (6) for a prover in preferable specification can be between 10 and 50.

17. Prover as claimed in claim 1, **wherein** the aforementioned prover (1) is a rectangular parallelepiped and that the input of a dough piece (8) takes place through an opening in the topside and by means of a hopper (23).

18. Prover as claimed in claim 17, **wherein** the side dimensions length x width x hight of the aforementioned prover compartment (1) in preferable specification are approximately 1300 x 1000 x 2500 mm.
